# EUROPÄISCHE PATENTANMELDUNG

(11) **EP 1 630 058 A1**
(43) Veröffentlichungstag der Anmeldung: **01.03.2006**
(21) Anmeldenummer: 05010289.6
(22) Anmeldetag: 12.05.2005
(51) Int. Cl.: B61G 9/20, B61G 9/04, B60D 1/173, F16B 7/20

(54) **Verbindungsvorrichtung mit einem Flansch, insbesondere um Schienenfahrzeuge miteinander zu verbinden.**

(30) Priorität: 27.08.2004 DE 102004041852
(71) Anmelder: ILLINOIS TOOL WORKS INC., Glenview Illinois 60026-1215 (US)
(72) Erfinder: Berger, Horst, 42929 Wermelskirchen (DE)
(74) Vertreter: Zech, Stefan Markus

(57) **Zusammenfassung**

Verbindungsvorrichtung mit einem Flansch (2), welcher an einem Träger (4) befestigt ist zur Übertragung von axialen Zug- und Druckkräften, dadurch gekennzeichnet, dass der Flansch (2) und der Träger (4) in einer Axialrichtung bis zu einer Kupplungszwischenstellung zusammensteckbar und dort relativ zueinander verdrehbar sind in eine Kupplungsschließstellung, in welcher der Flansch (2) und der Träger (4) in beiden Axialrichtungen sich gegenseitig abstützen für Übertragung der Zug- und Druckkräfte.

## Beschreibung

Die Erfindung betrifft eine Verbindungsvorrichtung mit einem Flansch, welcher an einem Träger befestigt ist zur Übertragung von axialen Zug- und Druckkräften gemäß dem Oberbegriff von Anspruch 1.

Aus dem Stand der Technik ist es bekannt, einen Flansch an einen Träger anzuschweißen oder anzuschrauben, wobei in letzterem Falle der Flansch mit einem Gewinde und der Träger mit einem dazu passenden Gewinde versehen ist. Bei einer Gewindeverbindung besteht die Gefahr, dass sie sich nach einer unbestimmten Benutzungszeit lockert und die Verbindung unbeabsichtigt gelöst wird. Ein am Träger angeschweißter Flansch hat den Nachteil, dass die gesamte Kombination aus Flansch und Träger ersetzt werden muss, wenn der Träger defekt wird. Der Träger kann ein beliebiges Element, eine Vorrichtung, eine Maschine oder ein Fahrzeug sein. Bei einer bevorzugten Anwendung der Erfindung ist der Träger ein Energiespeicher, welcher eine Feder enthält, oder ein Puffer, welcher ein kompressibles Material, beispielsweise flüssiges Elastomer, enthält. Beide Arten Energiespeicher und Puffer können beispielsweise in einem Kupplungsstrang zwischen Schienenfahrzeugen verwendet werden, um die Schienenfahrzeuge miteinander zu verbinden und zwischen den Schienenfahrzeugen Zugkräfte oder Druckkräfte aufzunehmen, je nach Fahrsituation. Bei einer Überlastung des Energiespeichers oder Puffers kann der Fall eintreten, dass dieser ausgetauscht werden muss. Bei Verwendung einer Gewindeverbindung zwischen Flansch und Träger (Energiespeicher oder Puffer) braucht dann nicht der Flansch ausgetauscht zu werden, sondern nur der Träger (Energiespeicher oder Puffer).

Durch die Erfindung soll die Aufgabe gelöst werden, eine betriebssichere Verbindung zwischen einem Flansch und einem Träger zu schaffen, welche im Bedarfsfall ohne Zerstörung eines dieser beiden Teile trennbar ist.

Diese Aufgabe wird gemäß der Erfindung durch die Merkmale von Anspruch 1 gelöst.

Dem gemäß betrifft die Erfindung eine Verbindungsvorrichtung mit einem Flansch, welcher an einem Träger befestigt ist zur Übertragung von axialen Zug- und Druckkräften, dadurch gekennzeichnet, dass der Flansch und der Träger in einer Axialrichtung bis zu einer Kupplungszwischenstellung zusammensteckbar und dort relativ zueinander verdrehbar sind in eine Kupplungsschließstellung, in welcher der Flansch und der Träger in beiden Axialrichtungen sich gegenseitig abstützen zur Übertragung von Zug- und Druckkräften.

Weitere Merkmale der Erfindung sind in den Unteransprüchen enthalten.

Ein bevorzugtes Anwendungsgebiet der Erfindung ist die Verwendung der Verbindungsvorrichtung in einem Verbindungsstrang zwischen Schienenfahrzeugen, wobei der Träger des Flansches ein Energiespeicher (mit einer oder mehreren Federn zur Energieaufnahme) oder ein Puffer (Energietransformer) mit einem kompressiblen festen oder flüssigen Kompressionsmaterial, vorzugsweise flüssigem Elastomer, ist.

Die Erfindung hat den Vorteil, dass sie eine betriebssichere Verbindung zwischen dem Flansch und dem Träger liefert, welche im Bedarfsfall wieder trennbar ist ohne Zerstörung des Flansches oder des Trägers. Die Erfindung hat ferner den Vorteil, dass der Flansch an dem Träger auf einfache Weise und schnell montierbar und auch demontierbar ist.

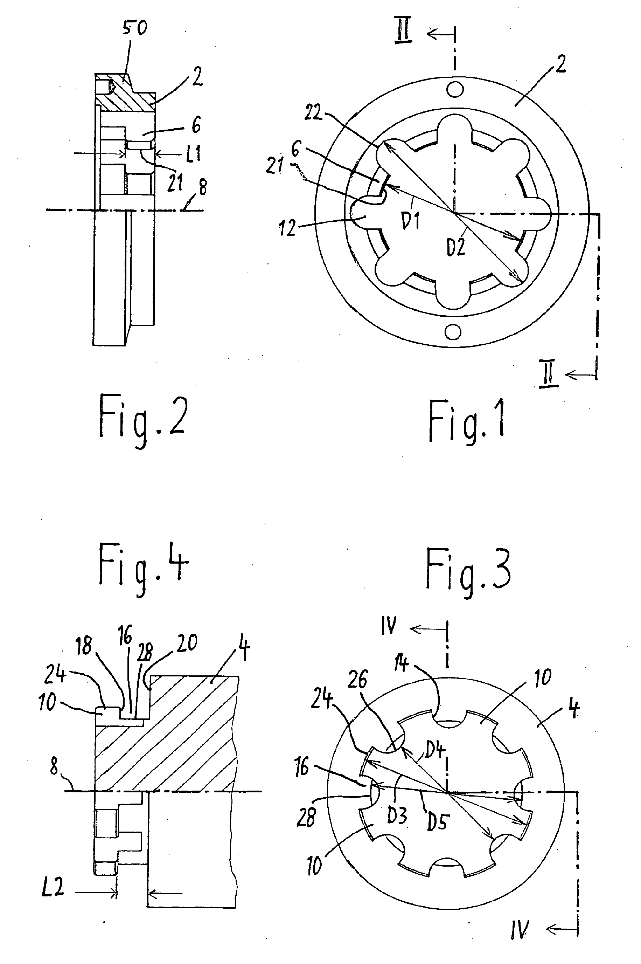

Die Erfindung wird im folgenden mit Bezug auf die beiliegenden Zeichnungen anhand einer bevorzugten Ausführungsform als Beispiel beschrieben. In den Zeichnungen zeigen
- Figur 1: eine vordere Stirnansicht eines Flansches nach der Erfindung,
- Figur 2: eine halbe Schnittansicht und eine halbe Seitenansicht des Flansches von Figur 1 entlang der Ebene II-II von Figur 1,
- Figur 3: eine vordere Stirnansicht eines Trägers, an welchem der Flansch befestigbar ist,
- Figur 4: eine halbe Schnittansicht und eine halbe Seitenansicht des Trägers längs der Ebene IV-IV von Figur 3,
- Figur 5: die obere Hälfte einer vorderen Stirnansicht des Flansches und des Trägers, zusammengesteckt in Axialrichtung bis zu einer Kupplungszwischenstellung,
- Figur 6: ein Längsschnitt der Kombination von Flansch und Träger entlang der Ebene VI-VI von Figur 5,
- Figur 7: eine vordere Stirnansicht der Kombination von Flansch und Träger, nachdem diese beiden ausgehend von der Kupplungszwischenstellung von Figur 5 relativ zueinander in eine Kupplungsschließstellung gedreht wurden und dann zwei Sicherungsbolzen in Zahnlücken eingesetzt wurden,
- Figur 8: einen abgebrochenen Längsschnitt der Kombination von Flansch und Träger von Figur 7 in der Ebene VIII-VIII,
- Figur 9: schematische Seitenansicht, teilweise im Längsschnitt, der Verbindungsvorrichtung nach den Figuren 1 bis 8, wobei der Träger gemäß einer bevorzugten Ausführungsform der Erfindung ein Puffer (Energietransformer) ist.

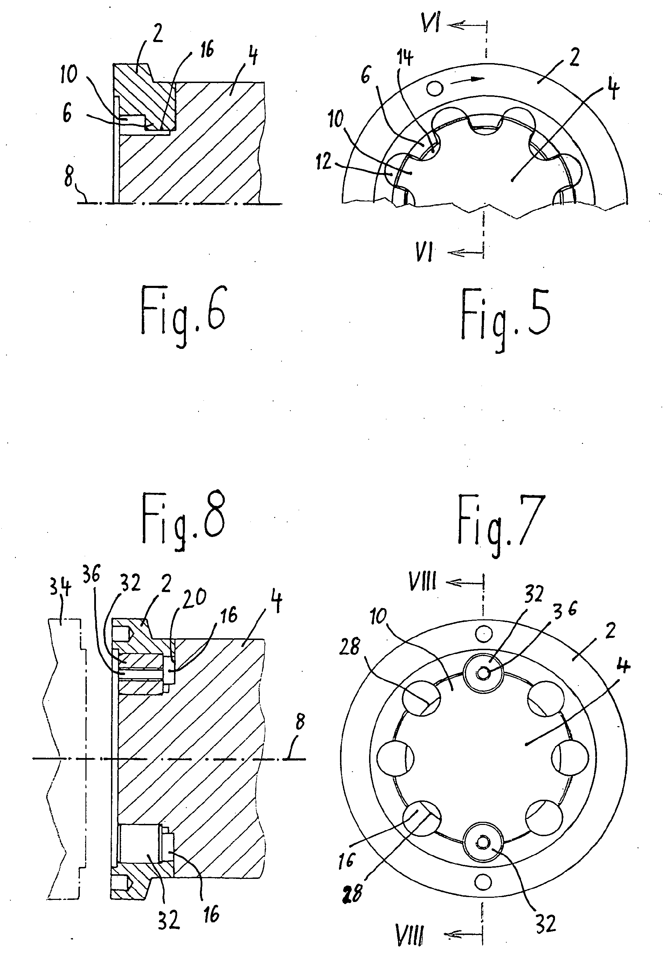

Die Verbindungsvorrichtung nach der Erfindung enthält einen Flansch 2 und einen Träger 4, welche zur Übertragung von axialen Zug- und Druckkräften miteinander betriebssicher, jedoch bei Bedarf trennbar verbunden sind. Der Flansch 2 und der Träger 4 sind in einer Axialrichtung bis zu einer Kupplungszwischenstellung, welche in den Figuren 5 und 6 gezeigt ist, zusammensteckbar und dort relativ zueinander verdrehbar in eine Kupplungsschließstellung, welche in den Figuren 7 und 8 gezeigt ist und in welcher der Flansch 2 und der Träger 4 in beiden Axialrichtungen sich gegenseitig abstützen zur Übertragung der axialen Zug- und Druckkräfte.

Der Flansch 2 hat einen Kranz von ersten Kupplungszähnen 6 kreisförmig um eine axiale Mittellinie 8 und der Träger 4 hat einen Kranz von zweiten Kupplungszähnen 10 kreisförmig um die gleiche axiale Mittellinie 8. Zwischen den ersten Kupplungszähnen 6 des Flansches 2 befinden sich Zahnlücken 12. Zwischen den zweiten Kupplungszähnen 10 des Trägers 4 befinden sich Zahnlücken 14.

Gemäß der Erfindung sind die einen Kupplungszähne 6 bzw. 10 durch die Zahnlücken 14 bzw. 12 der betreffenden anderen Kupplungszähne in Axialrichtung hindurchsteckbar bis in die Kupplungszwischenstellung. Gemäß der in den Zeichnungen gezeigten bevorzugten Ausführungsform der Erfindung sind die ersten Kupplungszähne 6 eine Innenverzahnung des Flansches 2 und die zweiten Kupplungszähne 10 sind eine Außenverzahnung des Trägers 4. Dem Fachmann ist es jedoch verständlich, dass es auch umgekehrt sein kann, wobei dann die ersten Kupplungszähne eine Außenverzahnung des Flansches sind und die zweiten Kupplungszähne eine Innenverzahnung des Trägers sind.

Hinter den zweiten Kupplungszähnen 10 des Trägers 4 ist im Träger 4 jeweils eine sich in Flanschumfangsrichtung erstreckende Führungsnut 16 für die ersten Kupplungszähne 6 des Flansches 2 gebildet, in welcher die ersten Kupplungszähne 6 des Flansches von der Kupplungszwischenstellung von Figur 5 und 6 in die Kupplungsschließstellung von Figur 7 und 8 drehbar sind. In der Kupplungsschließstellung sind die ersten Kupplungszähne 6 des Flansches 2 zwischen einer axial nach hinten zeigenden Zahnfläche 18 der zweiten Kupplungszähne 10 des Trägers 4 als eine Nutseitenfläche und einer ihr axial gegenüberliegenden, nach vorne zeigenden Nutseitenfläche 20 gefangen zur Übertragung der axialen Zug- oder Druckkräfte. Die ersten Kupplungszähne 6 haben in der Führungsnut 16 hinter den zweiten Kupplungszähnen 10 kein oder nur ein sehr kleines axiales Spiel.

Bei der bevorzugten Ausführungsform gemäß den Zeichnungen ist die Führungsnut 16 eine sich an allen Kupplungszähnen 10 des Trägers 4 vorbei über 360° kreisförmig um die axiale Mittelachse 8 erstreckende Umfangsnut, in deren Kreismitte die axiale Mittellinie 8 liegt. Eine solche Umfangsnut ist auf einfache Weise herstellbar. Gemäß einer anderen Ausführungsform der Erfindung, welche nicht so günstig herstellbar ist, erstreckt sich die Führungsnut 16 nicht über 360°, sondern jeweils nur von einer Zahnlücke bis hinter den ihr benachbarten zweiten Kupplungszahn 10 des Trägers 4 bis kurz vor die nächste Zahnlücke.

Die Zahnspitzen 21 der Kupplungszähne 6 des Flansches 2 liegen auf einem Kreisdurchmesser D1. Der Zahnlückengrund 22 der Zahnlücken 12 des Flansches 2 liegt auf einem Kreisdurchmesser D2. Die Zahnspitzen 24 der zweiten Kupplungszähne 10 des Trägers 4 liegen auf einem Kreisdurchmesser D3. Der Zahnlückengrund 26 der Zahnlücken 14 des Trägers 4 liegt auf einem Kreisdurchmesser D4. Der Nutgrund 28 der Führungsnut 16 liegt auf einem Kreisdurchmesser D5. Alle Kreisdurchmesser D1 bis D5 haben ihren Mittelpunkt auf der axialen Mittellinie 8.

Der Kreisdurchmesser D5 des Nutgrundes 28 der Führungsnut 16 ist gemäß der bevorzugten Ausführungsform der Erfindung maximal gleich groß oder nur wenig kleiner als der Kreisdurchmesser D1 der Zahnspitzen 21 des Flansches 2, so dass die Führungsnut 16 des Trägers 4 mit den Kupplungszähnen 6 des Flansches 2 eine Passung bildet, durch welche der Flansch 2 an dem Träger 4 radial zentriert wird.

Die Zahnlänge L1 der ersten Kupplungszähne 6 des Flansches 2 ist vorzugsweise maximal gleich groß oder nur wenig kleiner als die axiale Breite L2 der Führungsnut 16, so dass sie zusammen in Axialrichtung eine Passung bilden, welche axial spielfrei ist oder nur wenig Spiel hat.

Damit die Führungsnut 16 ihre Funktion zur radialen Führung und radialen Zentrierung des Flansches 2 an dessen Kupplungszähnen ausüben kann, muss der Kreisdurchmesser D5 des Nutgrundes 28 mindestens gleich groß sein wie der Kreisdurchmesser D4 des Zahnlückengrundes 26 der Kupplungszähne 10 des Trägers 4. Gemäß der bevorzugten Ausführungsform nach den Zeichnungen ist der Kreisdurchmesser D5 des Nutgrundes 28 größer als der Kreisdurchmesser D4 des Zahnlückengrundes 26 des Trägers 4, jedoch kleiner als der Kreisdurchmesser D3 der Zahnspitzen 24 des Trägers 4. Hierdurch ist eine preiswerte Herstellung der Führungsnut 16 und der zweiten Kupplungszähne 10 des Trägers 4 möglich, ohne dass zwischen dem Nutgrund 28 und dem Zahnlückengrund 26 eine besonders enge Toleranz eingehalten werden muss.

Wenn gemäß der genannten anderen Ausführungsform der Erfindung, welche nicht gezeigt ist, der Flansch 2 eine Außenverzahnung statt eine Innenverzahnung, und der Träger 4 eine Innenverzahnung statt eine Außenverzahnung hat, dann ist die Führungsnut 16 am Flansch 2 gebildet anstatt am Träger 4.

Zur drehfesten Verbindung des Flansches 2 mit dem Träger 4 müssen sie in der Kupplungsschließstellung, welche in den Figuren 5 bis 7 und 8 gezeigt ist, miteinander verriegelt werden. Dies erfolgt vorzugsweise durch einen oder mehrere Sicherungsbolzen, welche sich jeweils in den Flansch 2 und in den Träger 4 hinein erstrecken. Der mindestens eine Sicherungsbolzen kann beispielsweise radial in den Flansch 2 und den Träger 4 eingesetzt werden in Radialbohrungen, welche in diesen beiden Teilen gebildet werden.

Gemäß der bevorzugten Ausführungsform der Erfindung ist der mindestens eine Sicherungsbolzen 32 jeweils mit Haftsitz oder vorzugsweise Klemmsitz parallel zur axialen Mittellinie 8 in eine Zahnlücke 12 des Flansches 2 und in eine damit axial fluchtende Zahnlücke 14 des Trägers 4 eingesetzt, wobei der Sicherungsbolzen 32 so lang ist, dass er sich durch beide Zahnlücken 12 und 14 erstreckt und in beiden Zahnlücken an allen diesen Zahnlücken benachbarten Kupplungszähnen 6 des Flansches 2 und Kupplungszähnen 10 des Trägers 4 anliegt zur Drehsicherung und zur Drehmomentübertragung zwischen dem Flansch 2 und dem Träger 4 in der Kupplungsschließstellung von Figur 7 und 8.

Vorzugsweise wird nicht nur ein Sicherungsbolzen 32 verwendet, sondern mindestens zwei Sicherungsbolzen 32, welche um die axiale Mittellinie 8 herum vorzugsweise mit gleichen Umfangsabständen herum verteilt sind. Beispielsweise zeigen die Figuren 7 und 8 zwei solche Sicherungsbolzen 32.

Der Sicherungsbolzen 32 muss zwischen den Kupplungszähnen so fest sitzen, dass er nicht unbeabsichtigt herausfällt, sofern er nicht anderweitig gegen Herausfallen gesichert ist, beispielsweise durch ein am Flansch 2 auf seiner vom Träger 4 abgewandten axialen Seite angeordnetes Element 34, welches in Figur 8 schematisch dargestellt ist. Aber auch mit einem solchen Element 34 ist es zweckmäßig, den Sicherungsbolzen 32 verlustsicher zwischen den Kupplungszähnen des Flansches 2 und den Kupplungszähnen 10 des Trägers 4 einzuklemmen.

Gemäß der bevorzugten Ausführungsform, welche in den Zeichnungen gezeigt ist, insbesondere Figuren 7 und 8, kann der Sicherungsbolzen 32 mit einer Gewindebohrung 36 versehen sein, welche sich parallel zur axialen Mittellinie 8 durch den Sicherungsbolzen 32 vollständig hindurcherstreckt. Dadurch kann der zwischen den Kupplungszähnen eingeklemmte Sicherungsbolzen 32 aus den Zahnlücken 12 und 14 herausgetrieben werden durch eine Schraube, welche durch die Gewindebohrung 36 hindurchgeschraubt wird und sich dann an der Nutseitenfläche 20 abstützt, welche nach vorne zu den Kupplungszähnen hin zeigt. Durch Drehen der Schraube, während sie sich an dieser Nutseitenfläche 20 abstützt, wird der Sicherungsbolzen 32 aus den Zahnlücken 12 und 14 herausgetrieben.

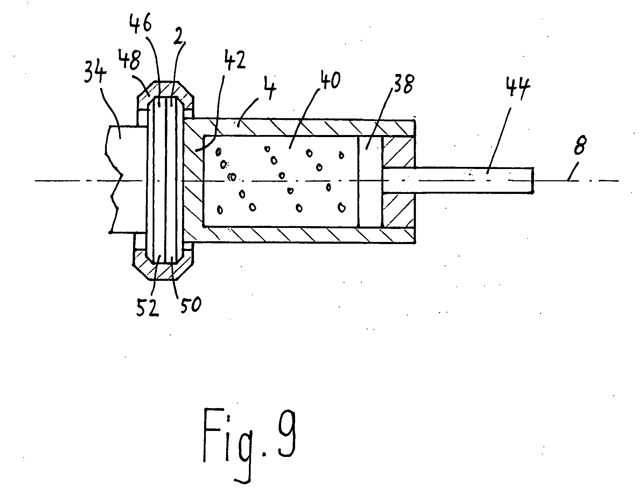

Figur 9 zeigt eine bevorzugte Anwendung von einer Vielzahl von möglichen Anwendungen der Erfindung. Bei der Ausführungsform von Figur 9 ist der Träger 4 ein Zylinder, welcher zusammen mit einem in ihm axial verschiebbaren Kolben 38 einen Puffer bildet. Der Zylinderinnenraum 40 ist zwischen seinem dem Flansch 2 benachbarten Zylinderboden 42 und dem sich am anderen Zylinderende befindenden Kolben 38 mit einem kompressiblen Material, beispielsweise flüssigem Elastomer, gefüllt. Der Kolben 38 ist mit einer Kolbenstange 44 versehen, welche in Längsrichtung der axialen Mittellinie 8 an dem vom Zylinderboden 42 und dem Flansch 2 entfernten Zylinderende aus dem Zylinder 4 herausragt und an einem nicht gezeigten, axial gegenüberliegenden Gegenstück anliegt zur Aufnahme von Druckstößen.

Auf der vom Träger 4 (Zylinder) axial abgewandten Seite des Flansches 2 liegt ein weiterer Flansch 46 eines zu verbindenden Elements 34 an. Die beiden Flansche 2 und 46 können auf jeder bekannten Weise miteinander verbunden sein, beispielsweise durch Schrauben oder entsprechend Figur 9 durch eine Kupplungsmuffe 48, welche den Außenumfangsbereich und Stirnrandbereiche der beiden Flansche 2 und 46 umgreift. Die Kupplungsmuffe 48 besteht beispielsweise aus zwei sich jeweils über 180° um die axiale Mittellinie 8 erstreckenden Muffenhälften oder Halbschalen, die miteinander verschraubt sind. Die beiden Flansche 2 und 46 haben jeweils einen radial über den Träger 4 (Zylinder) und das anzuschließende Element 34 radial hinausragenden Anschlussabschnitt 50 bzw. 52, welche von der Kupplungsmuffe 48 am Außenumfang und an stirnseitigen Abschnitten umfasst werden.

Gemäß der bevorzugten Ausführungsform der Erfindung sind jeweils die miteinander axial fluchtenden Zahnlücken 12 und 14 des Flansches 2 und des Trägers 4, welche den Sicherungsbolzen 32 aufnehmen, auf eine an die Größe des Sicherungsbolzens 32 angepasste Größe aufgebohrt. Dabei wird auch der Nutgrund 28 jeweils im Bereich der Zahnlücken vertieft. Durch dieses Aufbohren wird eine bessere Passgenauigkeit zwischen dem Sicherungsbolzen 32 einerseits und dem Flansch 2 und dem Träger 4 andererseits erzielt.

## Patentansprüche

1. Verbindungsvorrichtung mit einem Flansch (2), welcher an einem Träger (4) befestigt ist zur Übertragung von axialen Zug- und Druckkräften,
**dadurch gekennzeichnet,**
**dass** der Flansch (2) und der Träger (4) in einer Axialrichtung bis zu einer Kupplungszwischenstellung zusammensteckbar und dort relativ zueinander verdrehbar sind in eine Kupplungsschließstellung, in welcher der Flansch (2) und der Träger (4) in beiden Axialrichtungen sich gegenseitig abstützen für Übertragung der Zug- und Druckkräfte.

2. Verbindungsvorrichtung nach Anspruch 1
**dadurch gekennzeichnet,**
**dass** der Flansch (2) einen Kranz von ersten Kupplungszähnen (6) und der Träger (4) einen Kranz von zweiten Kupplungszähnen (10) aufweist, von welchem ein Kranz eine Innenverzahnung und der andere Kranz eine Außenverzahnung ist, und von welchen jeweils die einen Kupplungszähne (6, 10) durch Zahnlücken (14, 12) der anderen Kupplungszähne in Axialrichtung hindurchsteckbar sind bis in die Kupplungszwischenstellung in einer Führungsnut (16), welche sich mindestens hinter einem der beiden Kränze von Kupplungszähnen (6, 10) in Zahnkranz-Umfangsrichtung erstreckt und ausgebildet ist, um die in der Führungsnut (16) aufzunehmenden Kupplungszähne (6) in Zahnkranz-Umfangsrichtung von der Kupplungszwischenstellung in die Kupplungsschließstellung zu führen, in welcher letzterer die in der Führungsnut (16) aufgenommenen Kupplungszähne (6) an den Nutseitenflächen (18, 20) anliegen zur Übertragung der axialen Zugkräfte oder Druckkräfte.

3. Verbindungsvorrichtung nach Anspruch 2,
**dadurch gekennzeichnet,**
**dass** die Führungsnut (16) durch eine Umfangsnut gebildet ist, welche sich kreisförmig über 360° erstreckt.

4. Verbindungsvorrichtung nach einem der Ansprüche 2 oder 3,
**dadurch gekennzeichnet,**
**dass** der Nutgrund (28) der Führungsnut (16) als Zentrier- und Führungsfläche zur radialen Zentrierung der von der Führungsnut (16) aufzunehmenden Kupplungszähne (6) ausgebildet ist.

5. Verbindungsvorrichtung nach einem der vorhergehenden Ansprüche 2 bis 4,
**dadurch gekennzeichnet,**
**dass** die Führungsnut (16) hinter den Kupplungszähnen (10) der Außenverzahnung gebildet ist.

6. Verbindungsvorrichtung nach einem der Ansprüche 2 bis 5,
**dadurch gekennzeichnet,**
**dass** die ersten Kupplungszähne (6) eine Innenverzahnung des Flansches (2) und die zweiten Kupplungszähne (10) eine Außenverzahnung des Trägers (4) sind.

7. Verbindungsvorrichtung nach einem der vorhergehenden Ansprüche 2 bis 6,
**dadurch gekennzeichnet,**
**dass** der Nutgrund (28) der Führungsnut (16) auf einem Durchmesser (D5) liegt, welcher größer als ein Durchmesser (D4) ist, auf welchem der Zahnlückengrund (26) der Zahnlücken (16) der Kupplungszähne (10) liegt, welche eine Nutseitenfläche (18) der Führungsnut (16) bilden.

8. Verbindungsvorrichtung nach einem der vorhergehenden Ansprüche,
**gekennzeichnet durch**
mindestens einen Sicherungsbolzen (32), welcher sich in den Flansch (2) und in den Träger (4) erstreckt zur Drehsicherung dieser beiden Teile relativ zueinander und zur Drehmomentübertragung zwischen diesen beiden Teilen jeweils in der Kupplungsschließstellung.

9. Verbindungsvorrichtung nach Anspruch 8,
**dadurch gekennzeichnet,**
**dass** der mindestens eine Sicherungsbolzen (32) sich durch zwei miteinander axial fluchtenden Zahnlücken (12, 14) erstreckt, von welchen die eine Zahnlücke (12) zum Flansch (2) und die andere Zahnlücke (14) zum Träger (4) gehört, wobei der Sicherungsbolzen an allen diese Zahnlücken bildenden Kupplungszähnen (6, 10) anliegt zur spielfreien Drehsicherung und spielfreien Drehmomentübertragung zwischen dem Flansch (2) und dem Träger (4) in der Kupplungsschließstellung.

10. Verbindungsvorrichtung nach Anspruch 9
**dadurch gekennzeichnet,**
**dass** der mindestens eine Sicherungsbolzen (32) mit Haftsitz oder Presssitz in die Zahnlücken (12, 14) eingesetzt ist.

11. Verbindungsvorrichtung nach einem der vorhergehenden Ansprüche
**dadurch gekennzeichnet,**
**dass** der Flansch (2) einen radial über die Außenabmessungen des Trägers (4) hinausragenden Anschlussvorsprung zum Anschluss des Flansches (2) an einen weiteren Anschlussabschnitt (50) aufweist.

12. Verbindungsvorrichtung nach einem der vorhergehenden Ansprüche,
**dadurch gekennzeichnet,**
**dass** der Träger (4) eine Puffervorrichtung (4, 38, 40, 42, 44) oder eine Energiespeichervorrichtung ist, vorzugsweise von einer Kupplungsvorrichtung an Schienenfahrzeugen zum Ankuppeln von Schienenfahrzeugen aneinander.
